# FASCICULE DE BREVET EUROPEEN

(11) **EP 4 319 970 B1**
(45) Date de publication et mention de la délivrance du brevet: **23.04.2025**
(21) Numéro de dépôt: 22717868.8
(22) Date de dépôt: 28.03.2022
(51) Int. Cl.: B29C 70/22, B29B 11/06, B29B 11/16, B29C 70/24, B29C 70/50, B29C 70/54, D03D 25/00, D07B 3/00, D07B 5/00, D07B 7/02, B29C 70/20, B29C 70/46, B29C 70/48, B29C 43/02

(54) **AJUSTEMENT DU TORSADAGE POUR OPTIMISER LES MOULES ET LA MISE EN FORME DES ARCHITECTURES TEXTILES**
EINSTELLUNG DER VERDREHUNG ZUR OPTIMIERUNG VON FORMEN UND FORMUNG VON TEXTILARCHITEKTUREN
ADJUSTMENT OF TWIST TO OPTIMIZE MOULDS AND THE SHAPING OF TEXTILE ARCHITECTURES

(30) Priorité: 07.04.2021 FR 2103570
(43) Date de publication de la demande: 14.02.2024
(73) Titulaire: SAFRAN AIRCRAFT ENGINES, 75015 Paris (FR)
(72) Inventeur: WIELHORSKI, Yanneck, 77550 MOISSY-CRAMAYEL (FR); SCHNEIDER-DIE-GROSS, Julien Paul, 77550 MOISSY-CRAMAYEL (FR)
(74) Mandataire: Cabinet Beau de Loménie
(86) Numéro de dépôt international: PCT/FR2022/050579
(87) Numéro de publication internationale: WO 2022/214751

(56) Documents cités:
- EP-A1- 1 526 216
- EP-A2- 2 902 179
- WO-A1-2020/120869
- JP-A- S 609 987
- US-A1- 2018 162 076

## Description

### Domaine Technique

La présente invention se rapporte au domaine général du compactage de préformes tissées et plus particulièrement au compactage de préformes comprenant des torons tissés ayant un torsadage variable.

### Technique antérieure

Dans le domaine des pièces en matériau composite ayant un renfort fibreux tissé, on oriente habituellement les torons servant au tissage suivant des directions privilégiées afin d'obtenir les propriétés de résistance souhaitées.

Si l'on cherche à conférer à la pièce de la résistance en cisaillement, il est alors nécessaire d'orienter différemment les torons de la préforme fibreuse formant le renfort fibreux de la pièce. Pour cela, on tord les torons avec une valeur de 10 à 30 tours, ce qui revient à appliquer un angle compris entre 5° et 15° par rapport à la direction principale du toron.

Néanmoins, cela entraîne un effort de compaction plus important pour écraser les torons et donc toute la préforme fibreuse. De plus, la préforme peut présenter différents angles de torsadage des torons afin de s'adapter par exemple au rayon de courbure de la pièce.

Il a été constaté qu'actuellement, afin de compacter la préforme, on utilise un moule dimensionné pour supporter l'effort de compaction le plus important quel que soit le niveau de torsadage des torons. Par exemple, on dimensionne traditionnellement les moules avec des torons torsadés avec une valeur de 20 tours par mètre.

EP2902179 A2 divulgue une Installation de compactage de torons ou d'une préforme comprenant des torons et un procédé de compactage de torons ou d'une préforme comprenant des torons.

### Exposé de l'invention

La présente invention a pour but de proposer une solution de compactage qui permet de s'adapter aux niveaux de torsadage variables des torons et ainsi éviter le surdimensionnement des moules lors du compactage des torons.

A cet effet, l'invention concerne une installation de compactage de torons ou d'une préforme comprenant des torons selon la revendication 1.

Comme expliqué ci-après, les inventeurs ont constaté après étude que les moules étaient surdimensionnés pour pouvoir supporter l'effort de compaction le plus important appliqué aux torons. Ils ont également constaté que selon le torsadage des torons, l'épaisseur du moule contenant les torons pouvait être adaptée selon l'effort de compaction appliqué.

Par conséquent, selon l'invention, le moule de l'installation de compactage présente une épaisseur variable qui dépend du niveau de torsadage ou de l'angle de torsadage des torons. Ainsi, les zones du moule recevant des torons ayant un angle important de torsadage sont plus épaisses que les zones du moule recevant des torons non-torsadés ou faiblement torsadés.

Le moule selon l'invention présente donc plusieurs parties d'épaisseur variable, l'épaisseur de chaque partie dépendant de l'angle de torsadage des torons placés dans chaque partie.

Cela permet de ne pas surdimensionner le moule, c'est-à-dire de ne pas dimensionner le moule selon uniquement l'effort de compaction le plus important appliqué.

Selon l'invention, le premier angle est inférieur au deuxième angle et la première épaisseur est inférieure à la deuxième épaisseur. Selon une autre caractéristique particulière de l'invention, l'installation comprend également des moyens d'application d'au moins une première pression sur la première partie du moule et une deuxième pression, différente de la première pression, sur la deuxième partie du moule.

Les moyens d'application des première et deuxième pressions permettent d'appliquer un effort de compaction sur les torons et la préforme. Les pressions appliquées dépendent des angles de torsadage et des épaisseurs du moule. Ainsi, plus l'épaisseur du moule diminue, plus la pression appliquée sur le moule est faible. Selon une autre caractéristique particulière de l'invention, la première pression est inférieure à la deuxième pression.

Un autre objet de l'invention est un procédé de compactage de torons ou d'une préforme comprenant des torons selon la revendication 4.

Selon l'invention, les valeurs de première et deuxième pressions sont déterminées selon les premier et deuxième angle et/ou les première et deuxième épaisseurs.

Selon une autre caractéristique particulière de l'invention, le premier angle est inférieur au deuxième angle, la première pression est inférieure à la deuxième pression et la première épaisseur est inférieure à la deuxième épaisseur.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, un exemple de préforme que l'on compacte avec une installation ou un procédé selon l'invention.
[Fig. 2A] La figure 2A représente, de manière schématique et partielle, une installation de compactage selon un mode de réalisation de l'invention.
[Fig. 2B] La figure 2B représente, de manière schématique et partielle, une installation de compactage selon un mode de réalisation de l'invention.
[Fig. 3] La figure 3 représente l'épaisseur du toron en fonction de la pression de compactage pour des torons présentant des niveaux de torsadage différents.

### Description des modes de réalisation

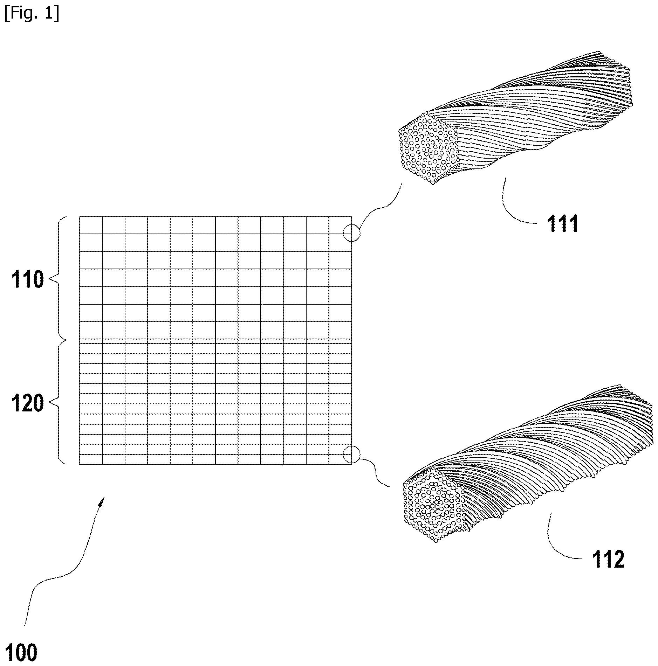

La figure 1 représente, de manière schématique et partielle, une préforme 100 que l'on peut compacter avec une installation de compactage et/ou un procédé de compactage selon l'invention.

La préforme 100 comprend deux portions 110 et 120 comprenant chacune des torons 111 et 112. Les torons 111 et 112 sont constitués d'une pluralité de fibres torsadées ensemble par une opération de retordage ou de torsadage des fibres. Le torsadage consiste à tordre la pluralité de fibres en considérant le centre de la section du toron comme l'axe de rotation. De cette manière, on obtient un angle de torsadage des fibres par rapport à la direction principale évolutif en fonction de la position suivant le rayon du toron. Ainsi on a un angle équivalent à 0° au centre du toron et maximum au niveau de la périphérie du toron. Cette orientation des fibres par rapport à la direction principale du toron permet de donner plus de tenue au toron et ainsi de limiter son effilochage lors d'une éventuelle opération de tissage des torons.

Les fibres constituant les torons 111 et 112 sont, par exemple, des fibres de carbone, de verre ou de kevlar. Les torons 111, 112 peuvent, par exemple, être réalisés à partir de 48 000 fibres en torsadant 4 mèches de 12 000 fibres, ou être réalisés à partir de 24 000 fibres en torsadant 2 mèches de 12 000 fibres.

Dans la première portion 110, les torons 111 sont torsadés selon un premier angle de torsadage, et dans la deuxième portion 120, les torons 112 sont torsadés selon un deuxième angle de torsadage supérieur au premier angle. Par exemple, les torons 111 présentent un torsadage de 10 tours par mètre, ce qui est équivalent à un angle de torsadage de 5° par rapport à la direction principale du toron ; tandis que les torons 112 présentent un torsadage de 30 tours par mètre, ce qui est équivalent à un angle de torsadage de 15° par rapport à la direction principale du toron.

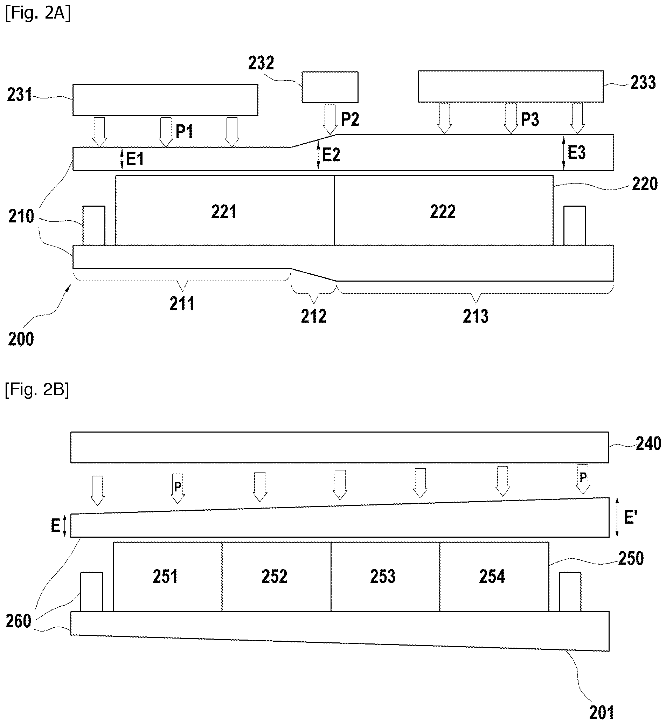

La figure 2A représente, de manière schématique et partielle, une installation de compactage 200 selon un mode de réalisation.

L'installation 200 comprend un moule 210 de compactage dans lequel on place une préforme 220 comprenant des torons. Comme expliqué en référence à la figure 1, la préforme 220 comprend plusieurs portions 221 et 222 dans lesquelles les torons présentent des angles de torsadage différents. Dans cet exemple, la première portion 221 de la préforme 220 comprend des torons torsadés selon un premier angle α1 et la deuxième portion 222 comprend des torons torsadés selon un deuxième angle α2. L'angle α2 est supérieur à l'angle α1.

Conformément à l'invention, le moule 210 comprend plusieurs parties 211, 212 et 213 d'épaisseur E1, E2, E3 variables, chaque partie étant destinée à recevoir au moins une partie d'une des portions de la préforme 220. Les épaisseurs E1, E2 et E3 du moule 210 sont définies en fonction des angles de torsadage des différentes portions de la préforme 220. Ainsi, la partie du moule 210 destinée à recevoir la portion de la préforme 220 ayant l'angle de torsadage le plus faible est la partie ayant la plus faible épaisseur, et la partie du moule 210 destinée à recevoir la portion de la préforme 220 ayant l'angle de torsadage le plus élevé est la partie ayant la plus grande épaisseur. En considérant que l'épaisseur E1 est inférieure à l'épaisseur E3, et que E2 est une épaisseur variant entre E1 et E3, la première partie 211 du moule 210, d'épaisseur E1, est destinée à recevoir la portion 221 de la préforme 220, et la troisième partie 213 du moule 210, d'épaisseur E3, est destinée à recevoir la portion 222. La deuxième partie 212 du moule 210, d'épaisseur variable E2 permet de faire la jonction entre les deux portions 221 et 222 de la préforme 220 pour adapter l'effort de compaction à la différence d'angle de torsadage entre les deux portions 221 et 222.

L'installation 200 peut également comprendre des moyens d'application 231, 232 et 233 d'une pression P1, P2, P3 sur le moule 210, et plus particulièrement sur certaines parties du moule 210. Les pressions P1, P2 et P3 appliquées par les différents moyens 231, 232 et 233 dépendent de l'épaisseur du moule et de l'angle de torsadage des torons.

Dans cet exemple, la pression P1 est inférieure à la pression P2 qui est elle-même inférieure à la pression P3. La pression P1 est appliquée par le moyen d'application 231 sur la première partie 211 du moule 210, partie qui présente l'épaisseur E1 la plus faible. La pression P3 est appliquée par le moyen d'application 233 sur la troisième partie 213 du moule 210 qui présente l'épaisseur E3 la plus importante. Enfin la pression P2 est appliquée par le moyen d'application 232 sur la deuxième partie 212 du moule 210. La pression P2 est une pression intermédiaire entre P1 et P3, elle est donc adaptée à la jonction entre les deux portions 221 et 222 de la préforme 220 qui ont des angles de torsadage différents.

Grâce à l'installation présentée, on peut, par exemple, lors de la fermeture du moule et de l'injection d'une résine dans le moule, adapter les pressions P1, P2 et P3 appliquées localement pour obtenir une préforme compactée ayant une épaisseur constante, malgré les différents angles de torsadage au sein de la préforme.

La figure 2B représente, de manière schématique et partielle, une installation de compactage 201 selon un autre mode de réalisation de l'invention.

L'installation 201 comprend un moule 260 de compactage dans lequel on place une préforme 250 comprenant des torons. Comme expliqué en référence à la figure 1, la préforme 250 comprend plusieurs portions 251, 252, 253 et 254 dans lesquelles les torons présentent des angles de torsadage différents. Dans cet exemple, la première portion 251 de la préforme 250 comprend les torons les plus faiblement torsadés, tandis que la quatrième portion 254 comprend les torons les plus fortement torsadés. Les deuxième et troisième portions 252 et 253 présentent des angles de torsadage intermédiaires de manière à ce que l'angle de torsadage soit croissant de la première portion 251 à la quatrième portion 254.

Conformément à l'invention, le moule 260 comprend plusieurs parties d'épaisseur variable. Ainsi dans ce mode de réalisation, l'épaisseur du moule est croissante et varie entre l'épaisseur E et l'épaisseur E', E' étant supérieure à E. La partie du moule présentant la plus faible épaisseur, c'est-à-dire une épaisseur E, est destinée à recevoir la portion de la préforme 250 ayant l'angle de torsadage le plus faible, c'est-à-dire la portion 251. La partie du moule présentant l'épaisseur la plus élevée, c'est-à-dire l'épaisseur E', est destinée à recevoir la portion de la préforme 250 ayant l'angle de torsadage le plus élevé, c'est-à-dire la portion 254. L'épaisseur croissante du moule entre E et E' permet bien de s'adapter également aux angles de torsadage croissants entre les quatre portions 251, 252, 253 et 254.

L'installation 201 peut également comprendre un moyen d'application 240 d'une pression P uniforme sur le moule 260. Grâce aux différentes épaisseurs du moule 260, l'effort de compaction appliqué sur les portions 251 à 254 de la préforme 250 est donc bien variable entre les portions 251 à 254 grâce à la variation d'épaisseur du moule 260.

Grâce à cette installation, on peut, par exemple, obtenir lors de la fermeture du moule et l'injection d'une résine dans le moule, une préforme compactée ayant une épaisseur variable ou une épaisseur constante, selon la valeur de pression P uniforme appliquée et les variations d'épaisseur du moule.

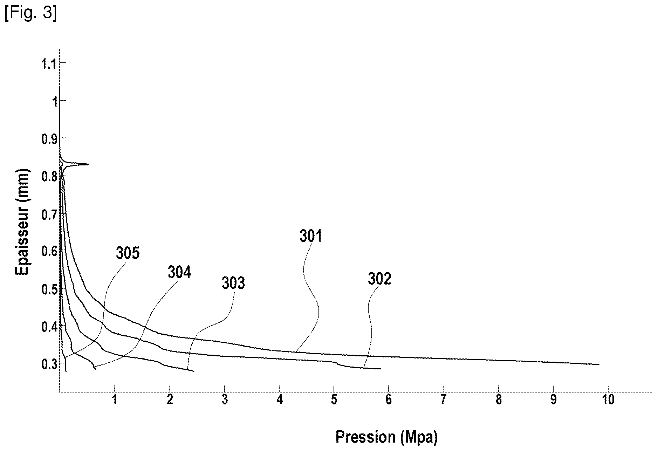

La figure 3 est un graphique représentant en ordonnées l'épaisseur du toron en millimètres (mm) en fonction de la pression de compaction appliquée sur le moule en mégapascal (MPa). L'épaisseur du toron est représentée pour plusieurs niveaux de torsadage de torons.

Pour chaque courbe 301 à 305, les torons sont formés de 24 000 fibres. Pour la courbe 301, les torons présentent un torsadage de 30 tours par mètre. Pour la courbe 302, les torons présentent un torsadage de 25 tours par mètre. Les torons de la courbe 303 présentent un torsadage de 20 tours par mètre, les torons de la courbe 304 présentent un torsadage de 15 tours par mètre et les torons de la courbe 305 présentent un torsadage de 10 tours par mètre. Ainsi, ce sont les torons de la courbe 305 qui sont les plus faiblement torsadés et ceux de la courbe 301 qui sont les plus fortement torsadés.

On constate que pour un torsadage donné, plus les torons sont épais et plus la pression de compaction à appliquer est faible ; tandis que pour une épaisseur de toron donnée, plus le niveau de torsadage est élevé, plus la pression de compactage est importante.

L'expression « compris(e) entre ... et ... » doit se comprendre comme incluant les bornes.

## Revendications

1. Installation (200, 201) de compactage de torons (111, 112) ou d'une préforme (100, 220, 250) comprenant des torons, les torons ou la préforme comprenant au moins une première portion (110, 221, 251) dans laquelle les torons sont torsadés selon un premier angle et une deuxième portion (120, 222, 254) dans laquelle les torons sont torsadés selon un deuxième angle différent du premier angle et supérieur au premier angle, l'installation comprenant un moule (210, 260) qui comprend les torons ou la préforme comprenant des torons, et étant **caractérisée en ce que** le moule présente au moins une première partie (211) dans laquelle est disposée la première portion des torons ou de la préforme (221, 251) la première partie ayant une première épaisseur (E1, E) et une deuxième partie (213) dans laquelle est disposée la deuxième portion des torons ou de la préforme (222, 254) la deuxième partie ayant une deuxième épaisseur (E3, E') différente de la première épaisseur et supérieure à la première épaisseur.

2. Installation selon la revendication 1, comprenant également des moyens d'application (231, 233) d'au moins une première pression (P1) sur la première partie du moule (211) et une deuxième pression (P2), différente de la première pression, sur la deuxième partie du moule (213).

3. Installation selon la revendication 2, dans laquelle la première pression (P1) est inférieure à la deuxième pression (P2).

4. Procédé de compactage de torons (111,112) ou d'une préforme (100, 220, 250) comprenant des torons, les torons ou la préforme comprenant au moins une première portion (110, 221, 251) dans laquelle les torons sont torsadés selon un premier angle et une deuxième portion (120, 222, 254) dans laquelle les torons sont torsadés selon un deuxième angle différent du premier angle, le procédé étant **caractérisé en ce qu'**il comprend :
- le placement des torons ou de la préforme dans un moule (210) de manière à ce que la première portion des torons (111,112) ou de la préforme (100, 220, 250) soit disposée dans une première partie du moule (211) et la deuxième portion des torons ou de la préforme soit disposée dans une deuxième partie du moule (212), la première partie du moule présentant une première épaisseur (E1, E) et la deuxième partie du moule présentant une deuxième épaisseur (E3, E') différente de la première épaisseur ; et
- l'application d'une première pression de compaction sur la première partie du moule (211) et d'une deuxième pression de compaction, différente de la première pression, sur la deuxième partie du moule (212), les valeurs de première et deuxième pressions étant déterminées selon les premier et deuxième angle et/ou les première et deuxième épaisseurs.

5. Procédé de compactage selon la revendication 4, dans lequel le premier angle est inférieur au deuxième angle, la première pression est inférieure à la deuxième pression et la première épaisseur est inférieure à la deuxième épaisseur.

## Patentansprüche

1. Anlage (200, 201) zum Kompaktieren von Strängen (111, 112) oder einer Vorform (100, 220, 250), die Stränge umfasst, wobei die Stränge oder die Vorform zumindest einen ersten Abschnitt (110, 221, 251), in dem die Stränge in einem ersten Winkel verdreht sind, und einen zweiten Abschnitt (120, 222, 254), in dem die Stränge in einem zweiten Winkel verdreht sind, der sich von dem ersten Winkel unterscheidet und größer als der erste Winkel ist, umfassen, wobei die Anlage eine Form (210, 260) umfasst, welche die Stränge oder die Vorform, welche die Stränge umfasst, umfasst, und **dadurch gekennzeichnet, dass** die Form zumindest einen ersten Teil (211), in dem der erste Abschnitt der Stränge oder der Vorform (221, 251) angeordnet ist, wobei der erste Teil eine erste Dicke (E1, E) aufweist, und einen zweiten Teil (213), in dem der zweite Abschnitt der Stränge oder der Vorform (222, 254) angeordnet ist, aufweist, wobei der zweite Teil eine zweite Dicke (E3, E') aufweist, die sich von der ersten Dicke unterscheidet und größer als die erste Dicke ist.

2. Anlage nach Anspruch 1, auch umfassend Aufbringungsmittel (231, 233) von zumindest einem ersten Druck (P1) auf den ersten Teil der Form (211) und einem zweiten Druck (P2), der sich von dem ersten Druck unterscheidet, auf den zweiten Teil der Form (213).

3. Anlage nach Anspruch 2, wobei der erste Druck (P1) kleiner als der zweite Druck (P2) ist.

4. Verfahren zum Kompaktieren von Strängen (111, 112) oder einer Vorform (100, 220, 250), die Stränge umfasst, wobei die Stränge oder die Vorform zumindest einen ersten Abschnitt (110, 221, 251), in dem die Stränge in einem ersten Winkel verdreht sind, und einen zweiten Abschnitt (120, 222, 254), in dem die Stränge in einem zweiten Winkel verdreht sind, der sich von dem ersten Winkel unterscheidet, umfassen, wobei das Verfahren **dadurch gekennzeichnet ist, dass** es umfasst:
- Platzieren der Stränge oder der Vorform in einer Form (210), sodass der erste Abschnitt der Stränge (111, 112) oder der Vorform (100, 220, 250) in einem ersten Teil der Form (211) angeordnet ist und der zweite Abschnitt der Stränge oder der Vorform in einem zweiten Teil der Form (212) angeordnet ist, wobei der erste Teil der Form eine erste Dicke (E1, E) aufweist und der zweite Teil der Form eine zweite Dicke (E3, E') aufweist, die sich von der ersten Dicke unterscheidet; und
- Aufbringen eines ersten Drucks zum Kompaktieren auf den ersten Teil der Form (211) und eines zweiten Drucks zum Kompaktieren, der sich von dem ersten Druck unterscheidet, auf den zweiten Teil der Form (212), wobei die Werte des ersten und des zweiten Drucks gemäß dem ersten und dem zweiten Winkel und/oder der ersten und der zweiten Dicke bestimmt werden.

5. Verfahren zum Kompaktieren nach Anspruch 4, wobei der erste Winkel kleiner als der zweite Winkel ist, der erste Druck kleiner als der zweite Druck ist und die erste Dicke kleiner als die zweite Dicke ist.

## Claims

1. An installation (200, 200) for compacting strands (111, 112) or a preform (100, 220, 250) comprising strands, the strands or the preform comprising at least a first portion (110, 221, 251) in which the strands are twisted at a first angle and a second portion (120, 222, 254) in which the strands are twisted at a second angle different from the first angle and greater than the first angle, the installation comprising a mould (210, 260) which comprises the strands or the preform comprising strands, and being **characterised in that** the mould has at least a first part (211) in which the first portion of the strands or of the preform (221, 251) is disposed, the first part having a first thickness (E1, E) and a second part (213) in which the second portion of the strands or of the preform (222, 254) is disposed, the second part having a second thickness (E3, E') different from the first thickness and greater than the first thickness.

2. The installation according to claim 1, also comprising means (231, 233) for applying at least a first pressure (P1) on the first part of the mould (211) and a second pressure (P2), different from the first pressure, on the second part of the mould (213).

3. The installation according to claim 2, in which the first pressure (P1) is less than the second pressure (P2).

4. A method for compacting strands (111, 112) or a preform (100, 220, 250) comprising strands, the strands or the preform comprising at least a first portion (110, 221, 251) in which the strands are twisted at a first angle and a second portion (120, 222, 254) in which the strands are twisted at a second angle different from the first angle, the method being **characterised in that** it comprises:
- placing the strands or the preform in a mould (210) so that the first portion of the strands (111, 112) or of the preform (100, 220, 250) is disposed in a first part of the mould (211) and the second portion of the strands or of the preform is disposed in a second part of the mould (212), the first part of the mould having a first thickness (E1, E) and the second part of the mould having a second thickness (E3, E') different from the first thickness; and
- applying a first compacting pressure on the first part of the mould (211) and a second compacting pressure, different from the first pressure, on the second part of the mould (212), the values of first and second pressures being determined according to the first and second angle and/or the first and second thickness.

5. The compacting method according to claim 4, in which the first angle is less than the second angle, the first pressure is less than the second pressure and the first thickness is less than the second thickness.
